(19) Europäisches Patentamt
European Patent Office
Office européen des brevets

(11) **EP 0 398 255 B2**

(12) **NEW EUROPEAN PATENT SPECIFICATION**

(45) Date of publication and mention
of the opposition decision:
**26.09.2007   Bulletin 2007/39**

(45) Mention of the grant of the patent:
**30.07.1997   Bulletin 1997/31**

(51) Int Cl.:
***G11B 7/24*** (2006.01)        ***G11B 7/00*** (2006.01)

(21) Application number: **90109147.0**

(22) Date of filing: **15.05.1990**

(54) **Optical recording medium and a system comprising a reproduction apparatus and the optical recording medium**

Optischer Aufzeichnungsträger und System bestehend aus einem Wiedergabegerät und einem solchen Aufzeichnungsträger

Support d'enregistrement optique et système formé d'un appareil de reproduction et d'un tel support d'enregistrement

(84) Designated Contracting States:
**DE FR GB**

(30) Priority: **17.05.1989   JP   12391589**

(43) Date of publication of application:
**22.11.1990   Bulletin 1990/47**

(73) Proprietor: **SANYO ELECTRIC CO., LTD.**
**Moriguchi-shi, Osaka (JP)**

(72) Inventors:
 • **Tsujioka, Tsuyoshi**
   **Higashisumiyoshi-ku,**
   **Osaka (JP)**
 • **Yamamoto, Shigeaki**
   **Ikuno-ku,**
   **Osaka (JP)**
 • **Tatezono, Fumio**
   **Hirakata-shi,**
   **Osaka (JP)**
 • **Kume, Minoru**
   **Nara-shi,**
   **Nara (JP)**
 • **Matsuura, Kotaro**
   **Tsuzuki-gun,**
   **Kyoto (JP)**

(74) Representative: **Glawe, Delfs, Moll**
**Patentanwälte**
**Postfach 26 01 62**
**80058 München (DE)**

(56) References cited:
EP-A- 0 013 453          EP-A- 0 023 736
EP-A- 0 130 026          EP-A- 0 218 263
EP-A- 0 290 009          EP-A- 0 304 050
EP-A- 0 352 105          EP-A- 0 353 391
EP-A- 0 353 392          EP-A- 0 353 393
EP-A- 0 353 394          EP-A- 0 376 327
EP-A- 0 396 040          US-A- 4 305 081

 • RESEARCH DISCLOSURE 20634 June 1981, Hampshire.England pages 237 - 241; Anonymous: "Optical disc structure,method and apparatus physically optimized for writing and reading with a single wavelength."
 • PATENT ABSTRACTS OF JAPAN vol. 008, no. 208 (P-302) 21 September 1984, & JP-A- 59 092448 (NIPPON COLUMBIA K.K.) 28 May 1984,
 • PATENT ABSTRACTS OF JAPAN vol. 9, no. 296 (P-407)(2019) 22 November 1985, & JP- A-60 133552 (HITACHI SEISAHUSHO K.K.) 16 July 1985,
 • PATENT ABSTRACTS OF JAPAN vol. 10, no. 188 (P-473)(2244) 03 July 1986, & JP-A- 61 032242 (CANON INC.) 14 February 1986,
 • Optical Data Storage Topical Meeting; oral presentation 17 - 19.01.1989, published in SPIE, Vol. 1078 (1989)
 • Nikkei Electronics, January, 23, 1989, page 107

**Description**

The present invention relates to optical recording media for optically recording data thereon, and more particularly to optical recording media having a recording layer comprising a dye material and to a system for recording data on the medium by irradiating the medium with a laser beam and thereby forming recording pits in the recording layer.

The use of organic dye materials in recording layers is under investigation for optical discs of the so-called WORM (write-once read-many) type ("NIKKEI ELECTRONICS," Nikkei McGraw-Hill Co., Ltd., Jan. 23, 1989, No. 465, p. 107). This document reflects the preamble of independent claims 1 and 3.

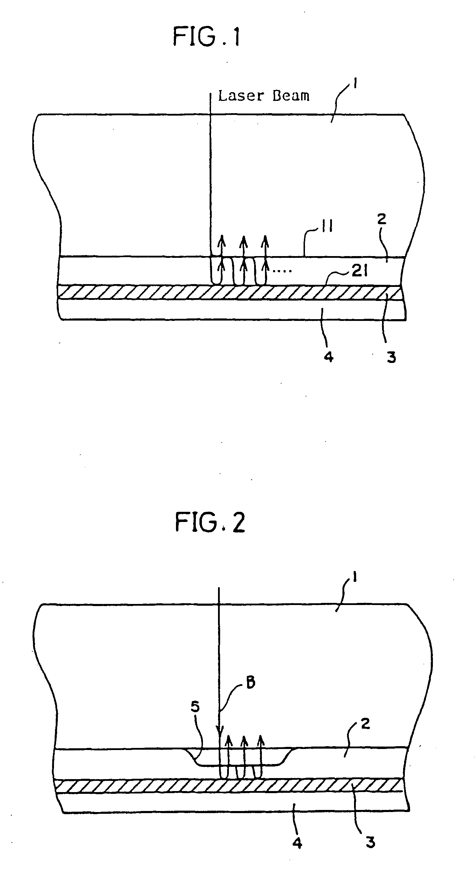

FIG. 1 shows the structure of such an optical disc in section. The disc comprises a transparent substrate 1 of polycarbonate or the like, and superposed layers formed thereon, i.e., a recording layer 2 made for example of a cyanine organic dye material, a reflecting layer 3 of copper or the like, and a protective layer 4 of ultraviolet-cured resin or the like.

Data is recorded on the disc by irradiating the disc with a laser beam B and thereby forming beam spots on the recording layer 2.

FIG. 2 shows the disc in section after the data has been recorded thereon. The recording layer 2 is decomposed by being exposed to the laser beam, and a pit 5 is formed at the interface between the substrate 1 and the recording layer 2 by pressure acting on the interface. Such pits 5 are formed discretely with varying lengths at varying intervals along a spiral track as in the case of compact discs, whereby the desired data is recorded.

The data is reproduced by irradiating the disc with a laser beam B as shown in FIG. 2. The above-mentioned literature ("NIKKEI ELECTRONICS," Jan. 23, 1989, No. 465, p. 107) describes the principle as follows. The portion of the recording layer 2 formed with the pit 5 has a smaller thickness than the other portion thereof which is not pitted. This creates a phase difference of light, which results in a lower reflectance of light at the recording portion. Accordingly, the data recorded can be read out by detecting the lower reflectance. This is the same as the principle on which compact discs operate which are adapted specifically for the reproduction of audio signals.

With the optical disc having the above dye layer, the nonrecording portion can be given an increased reflectance of about 78%. The optical disc then meets the so-called "Red Book" standard for the compact disc and becomes interchangeable with the conventional compact disc.

Nevertheless, the foregoing literature merely states that the nonrecording portion can be given a higher reflectance by setting the refractive index of the dye material for forming the recording layer and the thickness of the layer to optimal values but discloses nothing specifically about the method of designing such a recording layer or the structure of the layer including the thickness thereof.

It is further desirable for the reproduction of data to give the greatest possible difference in reflectance before and after data recording to realize a higher modulation degree of light. However, a specific structure of optical disc and a method of recording data for this purpose still remain to be developed.

An optical recording medium is disclosed in Research Disclosure, 20634, June 1981, pages 237 - 241. In this prior art the substrate is located on the back side of the reflective layer, whereby any light irradiated on to the recording layer does not travers any further transparent layer. This light is reflected only once at the interface between the recording layer and the reflective layer.

The purpose of this prior art is to obtain an optimal write situation, i.e. high absorbtion of writting light within the recording layer. To achieve this, the thickness of the recording layer is selected so that a substantial anti-reflection condition, i.e. destructive interference, exists between writting light irradiated on to the recording layer and light reflected from the reflective layer through the recording layer.

EP 376327, which is prior art under Art 54(3) EPC, shows an optical recording medium and system similar to the invention. However, this document does not show the general teaching of the invention.

It is an object of the invention to provide an optical recording medium and a system comprising an optical recording medium wherein the recording layer has an optimum thickness before recording so as to give a higher reflectance of light to the non-recording portion of the layer.

This object is achieved by a recording medium and a system as defined in claims 1 and 3, respectively; the dependent claims are related to further developments of the invention.

We have theoretically and experimentally found the relationship between the thickness of the recording layer and the reflectance of light on the surface of the recording layer, and found that the thickness, at which the reflectance of light becomes maximum or minimum, relates to factors such as complex indexes of refraction of the recording layer and the reflecting layer. On the basis of these relationships, we have accomplished the present invention which provides the recording layer with an optimal thickness based on the relationship.

More specifically, we have found for the first time that when the refractive index of the recording layer is set to a considerably great value, the reflectance of the surface of the recording layer varies periodically with the variation in the thickness of the recording layer and exhibits maximum values (local maximum values) and minimum values (local minimum values).

With the optical recording medium embodying the present invention, the thickness of the recording layer in an unrecorded state is set to a value at which the reflectance comes to a maximum value or to a value approximate thereto, based on this relationship. When the recording medium is irradiated with a light beam for data recording, the reflectance of the recording portion of the recording layer greatly decreases from the initial value. This gives a sufficiently increased modulation degree of reflected light for the subsequent reproduction of the data.

According to the recording system of the invention for the optical recording medium, the thickness of the recording layer in an unrecorded state is set to a predetermined value at which the reflectance of light at the surface of the recording layer comes to a maximum value or to a value approximate thereto, and the power and like irradiation conditions of the light beam for recording data are so set as to give the pitted portions of the recording layer a predetermined thickness at which the reflectance of light at the surface of the recording layer comes to a minimum value or to a value approximate thereto.

The system maximizes the difference in the reflectance of light between the data recording portions of the recording layer and the nonrecording portion thereof to result in a sufficiently increased modulation degree of light for the reproduction of the data.

Other objects of the present invention will become apparent from the following description of embodiments.

FIG. 1 is a diagram in section showing the structure of an optical disc having a recording layer of organic dye material before data recording;

FIG. 2 is a diagram in section showing the same after data recording;

FIG. 3 is a graph showing the theoretical relationship between the thickness of the recording layer and the reflectance;

FIG. 4 is a graph showing the result of a first experiment conducted to determine the relationship between the thickness of the recording layer and the reflectance;

FIG. 5 is a graph showing the result of a second experiment for determining the relationship between the power of the laser beam and the reflectance;

FIG. 6 is a graph showing the result of a third experiment for determining the relationship between the power of the laser beam and the reflectance;

FIG. 7 is a graph showing the result of a fourth experiment for determining the relationship between the thickness of the recording layer and the reflectance;

FIG. 8 is a graph showing the result of a fifth experiment for determining the relationship between the power of the laser beam and the reflectance; and

FIG. 9 is a diagram for illustrating the principle of the present invention.

First, the principle of the present invention will be described theoretically.

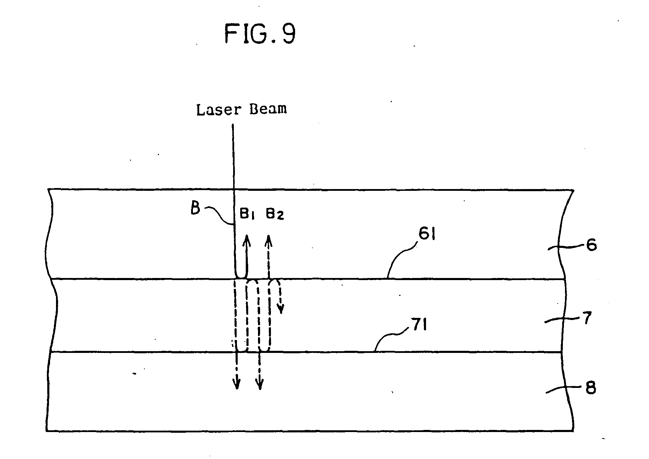

With reference to FIG. 9, a laser beam B is projected on an assembly of three media 6, 7 and 8 arranged in superposed layers and different in refractive index. The reflection of the beam will be considered. As illustrated, the beam B propagating through the first medium 6 toward the second medium 7 is partly reflected at the first interface 61 between the two media 6 and 7 as indicated at $B_1$, and the remaining portion of the beam is transmitted through the interface 61 as indicated in a broken line. The transmitted beam is further similarly reflected at and transmitted through the second interface 71 between the second medium 7 and the third medium 8. The beam portion reflected at the second interface 71 is further reflected at and transmitted through the first interface 61.

Consequently, the beam reflected from the first interface 61 is one composed of the beam $B_1$ reflected at this interface first and the beam $B_2$ transmitted from the second medium 7 through the first interface 61 as described above. As shown in a broken line, the transmitted beam $B_2$ includes a beam reflected at the interfaces 61, 71 a plurality of times and thereafter transmitted through the first interface 61.

Accordingly, the overall reflectance coefficient (ratio in electric field amplitude between incident light and reflected light) at the first interface 61 needs to be determined with both the beams $B_1$ and $B_2$ considered, and is expressed by the following equation as is already known.

$$r^* = \frac{r_1 + r_2 \cdot \exp(-i\delta)}{1 + r_1 \cdot r_2 \cdot \exp(-i\delta)} \tag{1}$$

where $r_1$ is the reflectance coefficient of the first interface 61 for the light propagating through the first medium 6, and $r_2$ is the reflectance coefficient of the second interface 71 for the light propagating through the second medium 7. When the beam is incident on the interfaces perpendicular thereto, $\delta$ is expressed by the following equation.

$$\delta = \frac{4\pi \, nd}{\lambda} \qquad\qquad (2)$$

where $\lambda$ is the wavelength of the laser beam, and $n$ and $d$ are the refractive index and thickness of the second medium 7. As will be apparent from Equations (1) and (2), the reflectance coefficient of the first interface 61 is dependent on the thickness of the second medium 7.

When FIG. 9 is made to correspond to FIG. 1, the first medium 6 corresponds to the transparent substrate 1, the second medium 7 to the recording layer 2, and the third medium 8 to the reflecting layer 3.

Suppose the refractive indexes of the substrate 1 and the recording layers 2 are $n_0$, $n_1$, respectively, the imaginary component (hereinafter referred to as the "extinction coefficient") of the complex index of refraction of the recording layer 2 is $k_1$, the refractive index of the reflecting layer 3 is $n_2$, and the extinction coefficient of the reflecting layer 3 is $k_2$. The reflectance coefficient $r_1$ at the first interface 11 between the substrate 1 and the recording layer 2, and the reflectance coefficient $r_2$ at the second interface 21 between the recording layer 2 and the reflecting layer 3 are then expressed by Equations (3) and (4), respectively, given below.

$$r_1 = |r_1| \cdot \exp(i\delta_1) \qquad\qquad (3)$$

$$r_2 = |r_2| \cdot \exp(i\delta_2) \qquad\qquad (4)$$

where $|r_1|$, $|r_2|$, $\delta_1$ and $\delta_2$ are expressed by Equations (5) to (8), respectively.

$$|r_1| = \sqrt{\frac{(n_1 - n_0)^2 + k_1^2}{(n_1 + n_0)^2 + k_1^2}} \qquad\qquad (5)$$

$$|r_2| = \sqrt{\frac{(n_2 - n_1)^2 + (k_2 - k_1)^2}{(n_2 + n_1)^2 + (k_2 + k_1)^2}} \qquad\qquad (6)$$

$$\delta_1 = \tan^{-1} \frac{2k_1 n_0}{n_1^2 - n_0^2 + k_1^2} \qquad\qquad (7)$$

$$\delta_2 = \tan^{-1} \frac{2(k_1 n_2 - k_2 n_1)}{n_2^2 - n_1^2 + k_2^2 - k_1^2} \qquad\qquad (8)$$

Described above is a known analysis of the reflection and transmission of light in the assembly of three superposed layers. A similar analysis is given, for example, in Akira Kinbara and Hideo Fujiwara, "Applied Physics, Book 3, Thin Films," Shokabo, pp. 196-198.

We further advanced the above analysis to theoretically determine reflectances in the optical disc of FIG. 1.

When Equation (4) is modified in view of the variation of phase and attenuation of amplitude which occur when the beam passes through the recording layer 2, the reflectance coefficient at the second interface 21 can be expressed by the following equation.

$$\tilde{r}_2 = r_2 \cdot \exp(-i\nu) \cdot \exp(-4\pi \, dk_1/\lambda) \qquad \cdots (9)$$

$$v = \frac{4\pi \, dn_1}{\lambda} \qquad (10)$$

On the right-hand side of Equation (9), $\exp(-4\pi dk_1/\lambda)$ is a factor due to the attenuation, and $v$ in Equation (10) is a factor due to the phase difference.

By applying Equations (3) and (9) to Equation (1), the reflectance coefficient at the first interface 11 will be expressed as follows.

$$r^* = \frac{r_1 + r_2 \cdot \exp(-4\pi \, dk_1/\lambda) \cdot \exp(-i \cdot 4\pi \, dn_1/\lambda)}{1 + r_1 \cdot r_2 \cdot \exp(-4\pi \, dk_1/\lambda) \cdot \exp(-i \cdot 4\pi \, dn_1/\lambda)} \qquad (11)$$

What is generally termed reflectance refers to energy reflectance and is expressed as the square of reflectance coefficient. Accordingly, the energy reflectance at the first interface 11 is calculated from the following equation.

$$R = |r^*|^2$$
$$= \frac{C_1 + C_2 + C_3}{1 + C_4 + C_5} \qquad (12)$$

where

$$C_1 = |r_1|^2$$
$$C_2 = |r_2|^2 \cdot \exp(-8\pi \, dk_1/\lambda)$$
$$C_3 = 2|r_1| \cdot |r_2| \cdot \exp(-4\pi \, dk_1/\lambda) \cdot \cos(v - \delta_1 - \delta_2)$$
$$C_4 = |r_1|^2 \cdot |r_2|^2 \cdot \exp(-8\pi \, dk_1/\lambda)$$
$$C_5 = C_3$$

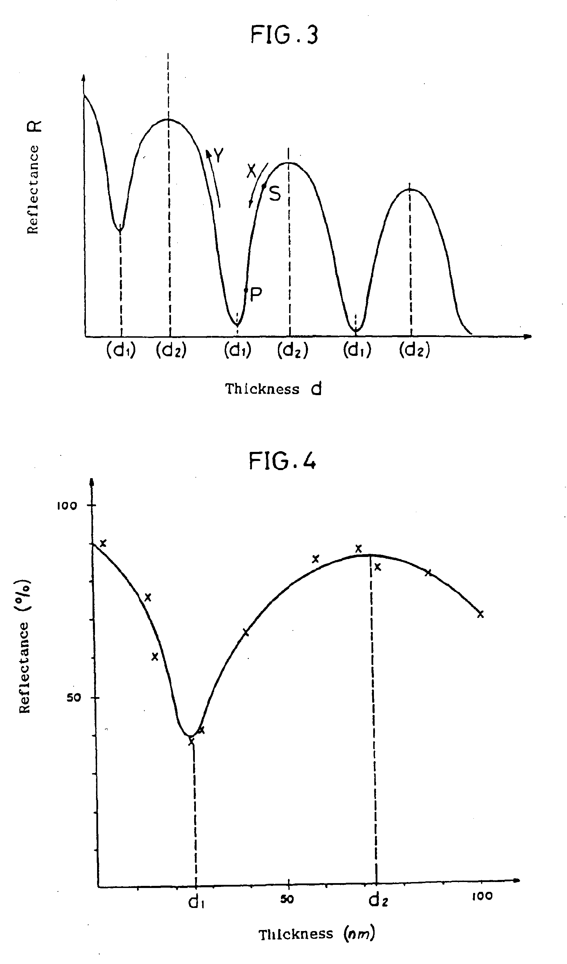

FIG. 3 is a graph representing the reflectance R of Equation (12). The graph shows that the reflectance varies periodically with the variation in the thickness of the recording layer and has maximum values and minimum vales. From Equation (12), thicknesses $d_1$ and $d_2$ at which the reflectance R is minimum and maximum are given by:

$$d_1 = \frac{\lambda}{4\pi \, n_1} (m\pi + \delta_1 + \delta_2) \qquad (13)$$

$$d_2 = \frac{\lambda}{4\pi \, n_1} \{(m + 1)\pi + \delta_1 + \delta_2\} \qquad (14)$$

where m is an integer giving positive $d_1$ and $d_2$ values.

Accordingly, when the thickness d of the recording layer 2 is set to the value of $d_2$ or a value approximate thereto, the reflectance of the nonrecording portion can be maximized, while the reflectance of the recording portions produced by exposure to the laser beam can be made smaller than the reflectance of the non-recording portion. Further in this case, the intensity of the laser beam for data recording is set to a suitable value so as to approximate the thickness of the pitted recording portions to the value $d_1$ to the greatest possible extent, whereby the difference in reflectance between the recording portions and the nonrecording portion can be maximized to fully increase the modulation degree of reflected light for the reproduction of the data.

In principle, data can be recorded and reproduced by providing a difference in reflectance between the recording portions of the recording layer 2 and the nonrecording portion thereof. As already stated, therefore, the reflectance of the recording layer 2 in an unrecorded state is set to a maximum, and the recording portions of the layer 2 are reduced in reflectance by irradiation with the laser beam as indicated by the arrow X in FIG. 3. In principle, it is also possible to set the reflectance of the recording layer 2 in an unrecorded state to a minimum and to increase the reflectance of the recording portions of the recording layer 2 by irradiation with the laser beam as indicated by the arrow Y in FIG. 3. In this case, the thicknesses $d_1$ and $d_2$ of the recording layer 2 corresponding to a minimum and a maximum of the reflectance, respectively, are calculated from the following equations, like Equations (13), (14).

$$d_1 = \frac{\lambda}{4\pi n_1} \{(m + 1)\pi + \delta_1 + \delta_2\} \qquad (15)$$

$$d_2 = \frac{\lambda}{4\pi n_1} (m\pi + \delta_1 + \delta_2) \qquad (16)$$

Further in the case where the difference in reflectance between the recording portions of the layer 2 and the nonrecording portion thereof need not be increased to the greatest value afforded by the difference between the maximum and the minimum mentioned, the difference in reflectance before and after data recording may be set within the range which is represented by a middle straight-line segment S - P of a maximum-to-minimum portion of the reflectance characteristics curve in FIG. 3 and which is away from the maximum and the minimum. This also affords a sufficient reflectance difference due to a small difference in the thickness of the recording layer.

The principle of the present invention will be described in greater detail with reference to experimental data.

The optical discs used for experiments were each prepared with use of a polycarbonate substrate having a refractive index $n_0$ of 1.5 and serving as the transparent substrate 1 shown in FIG. 1, by coating the surface of the substrate 1 with a cyanine dye, 4.5 in refractive index $n_1$ and 0.2 in extinction coefficient $k_1$, by spin coating to a specified thickness as will be stated below, and further depositing copper, 0.17 in refractive index $n_2$ and 4.84 in extinction coefficient $k_2$, on the surface of the resulting recording layer 2 by vacuum evaporation to form a film having a thickness of 100 nm and serving as the reflecting layer 3.

Some of the optical discs of the above structure, varying in the thickness of the recording layer 2, were checked for the reflectance R. FIG. 4 is a graph showing the measurements obtained. The laser beam used for recording data was 0.78 $\mu$m in wavelength $\lambda$.

The graph of FIG. 4 reveals that the reflectance varies with the variation in the thickness of the recording layer and exhibits a minimum and a maximum. This tendency is in conformity with the graph of FIG. 3. The experimental result indicates that the thicknesses $d_1$ and $d_2$ corresponding to the minimum and the maximum of the reflectance are 26 nm and 72 nm, which are approximate respectively to 32 nm and 75 nm calculated from the foregoing theoretical equations, i.e., Equations (13), (14). This justifies the theoretical analysis described above.

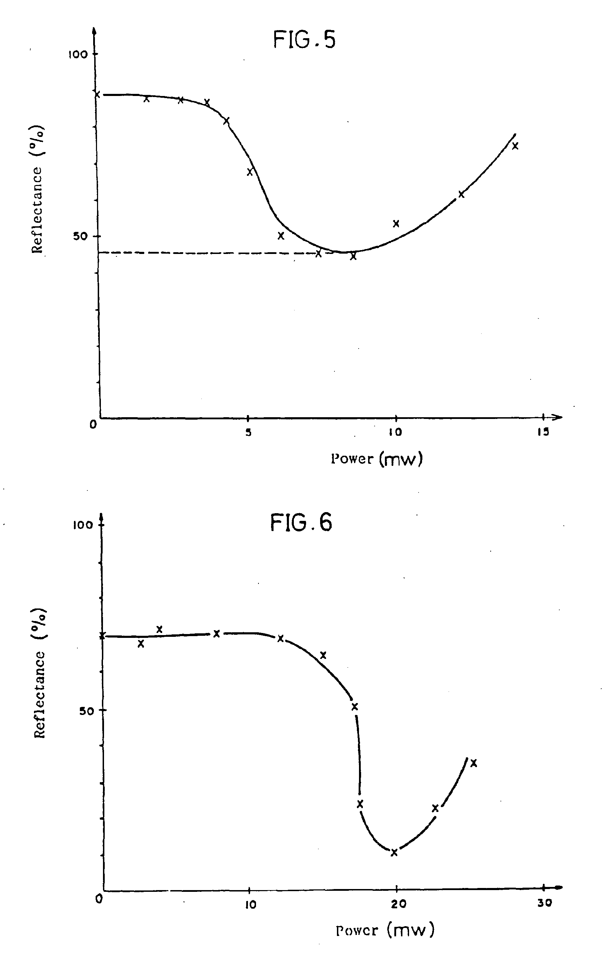

Next, using some of the discs wherein the recording layer had a thickness giving approximately a maximum of reflectance, an experiment was conducted in which the reflectance of the recording portion was measured by varying the power of the laser beam. The laser beam was maintained at a constant wavelength $\lambda$ of 0.78 $\mu$m, and the recording layer was irradiated in the form of a spot with a diameter of 2 $\mu$m for a period of 500 nsec. FIG. 5 is a graph showing the result of this experiment.

The graph shows that as the power of the laser beam increases, the reflectance gradually decreases from about 90%, consequently exhibiting a minimum of about 46% at a power value of about 8 mw.

On the other hand, the experimental result shown in FIG. 4 reveals that as the thickness of the recording layer decreases from about 72 nm to about 26 nm, the reflectance gradually decreases from about 90% to about 40%. Thus, the variation in the reflectance shows the same tendency as the experimental result given in FIG. 4. Presumably, this is attributable to the fact that as the power of the laser beam increases, the recording layer decomposes to a greater extent, increasing the depth of the pit and reducing the thickness of the recording portion of the layer. Accordingly it is thought that the experiment shown in FIG. 5 reduced the thickness of the recording portion of the layer to about 26 nm by the projection of the laser beam with power of 8 mw.

Next, optical discs wherein the recording layer 2 was 160 nm in initial thickness were checked for variations in the reflectance due to variations in the power of laser beam under the same conditions as in the experiment of FIG. 5. This thickness of the recording layer is the value of $d_2$ obtained from Equation (14) where m is 30. FIG. 6 is a graph showing the experimental result, revealing the same tendency as FIG. 3 or 5. Incidentally, the power value of the laser beam at which the reflectance is minimum is 20 mw, which is greater than the corresponding value of 8 mw in FIG. 5. This appears attributable to the fact that the recording layer 2 has a larger thickness and therefore a greater thermal capacity and rises in temperature at a lower rate.

The same characteristics as above will be obtained also when m is 32. However, as the value m increases, the thickness of the recording layer 2 increases, necessitating a greater laser beam power as stated above. To record data with a low power, therefore, it is desirable to set the value m to the smallest possible value.

The results of experiments will be described wherein a different kind of dye material was used for the recording layer 2 to reduce the refractive index $n_1$ from the foregoing value of 4.5 to 2.0.

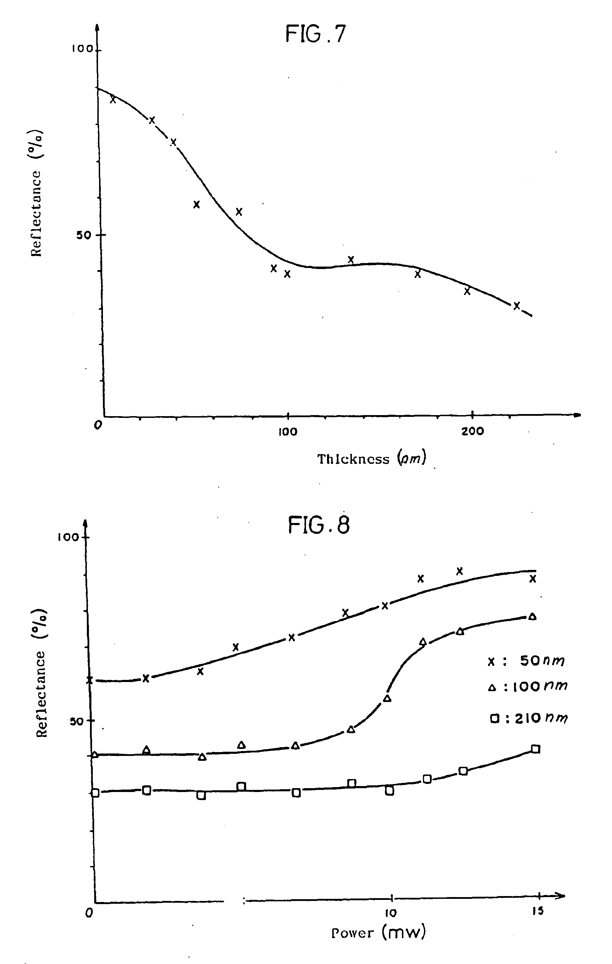

FIG. 7 is a graph showing the result of one of the experiments. The reflectance steadily increases with decreasing thickness of the recording layer, thus exhibiting no periodical variation. This case can therefore be utilized only for data recording media which are based on the principle of increasing the reflectance by decreasing the thickness of the recording layer. However, as will be apparent from the graph of FIG. 7, the rate of variation in the reflectance decreases as the thickness of the recording layer increases, so that the recording layer in an unrecorded state preferably has a thickness of smaller than 100 nm.

FIG. 8 shows the result of the other experiment which was conducted by varying the power of laser beam under the same conditions as in the experiment of FIG. 7 and using three kinds of discs wherein the recording layer 2 was 50 nm, 100 nm or 210 nm in thickness. The graph shows that when the thickness of the recording layer is 50 nm or 100 nm, the same reflectance characteristics as shown in FIG. 7 can be obtained, whereas in the case where the thickness is 210 nm, the reflectance exhibits little or no variation. The experimental result therefore also indicates that it is desirable to make the thickness of the recording layer in an unrecorded state smaller than 100 nm.

To sum up, the theoretical analysis and the experimental results described above reveal the following.

In the case where the principle of decreasing the reflectance of the recording layer by data recording is to be resorted to, it is desired that the dye material for forming the recording layer have the greatest possible refractive index. The reflectance then periodically varies with the thickness of the recording layer as seen in FIGS. 3 and 4.

In this case, the thickness of the recording layer in an unrecorded state is set to $d_2$ at which the reflectance is locally maximum or to a smaller value. The reflectance can then be greatly decreased (as indicated by the arrow X in FIG. 3) by subsequently recording data on the layer to increase the modulation degree of reflected light.

On the other hand, when the principle of increasing the reflectance of the recording layer by data recording is to be employed, the periodical variation of the reflectance shown in FIGS. 3 and 4 can also be utilized. In this case, the thickness of the recording layer in an unrecorded state is set to $d_1$ at which the reflectance is locally minimum. The reflectance can then be greatly increased (as indicated by the arrow Y in FIG. 3) by subsequent data recording to increase the modulation degree of reflected light.

In this case, the refractive index of the dye material for forming the recording layer can be smaller to some extent, but the initial thickness of the recording layer needs to be set to the smallest possible value.

The materials for forming the component layers of the optical recording medium of FIG. 1 are not limited to those described above. The substrate 1 can be prepared from acrylic resin, PMMA (epoxy resin), polymer alloy produced from a mixture of polycarbonate and polystyrene, etc. Phthalocyanine dyes, naphthalocyanine dyes, polymethine dyes, etc. are usable for the recording layer 2. The reflecting layer 3 can be prepared from metals which are sufficiently greater than the recording layer 2 in extinction coefficient and sufficiently smaller than the recording layer 2 in refractive index, such as gold and silver. $SiO_2$ and the like can be used for the protective layer 4.

Furthermore, the optical recording medium of the present invention can be embodied not only as an optical disc but also as an optical tape.

## Claims

1.  An optical recording medium comprising a light-transmitting recording layer (2), a reflecting layer (3) formed on the rear surface of the recording layer (2) and a transparent substrate (1) located on the front side of the recording layer, the recording layer (2) being adapted to record data thereon by being locally irradiated with a light beam on the front surface thereof through the transparent substrate and thereby reduced in thickness for forming pits, the light irradiated through the transparent substrate (1) is reflected partly at the interface (11) of the substrate (1) and the recording layer (2) and partly at the interface (21) of the recording layer (2) and the reflecting layer (3), **characterized in that** the reflectance of the recording medium resulting from these reflections is a function of the thickness (d) of the recording layer (2) having maxima and minima at predetermined values of said thickness (d),
    and that the thickness (d) of the recording layer in the unrecorded state is set to a predetermined value where the reflectance is a maximum, a thickness ($d_2$), which gives the maximum reflectance is expressed by the following equation,

$$d_2 = \frac{\lambda}{4\pi n_1}\{(m+1)\pi + \delta_1 + \delta_2\}$$

$$\delta_1 = \tan^{-1} \frac{2k_1 n_0}{n_1^2 - n_0^2 + k_1^2}$$

$$\delta_2 = \tan^{-1} \frac{2(k_1 n_2 - k_2 n_1)}{n_2^2 - n_1^2 + k_2^2 - k_1^2}$$

where $\delta_1$, $\delta_2$, $(m+1)\pi$ are in radian, $\lambda$ is a wavelength of a laser beam and is 0.78 $\mu$m, $n_0$ is a refractive index of the substrate (1) at wavelength $\lambda$, and m is an integer giving positive $d_2$ value and m is set to the smallest possible value, and the extinction coefficient (k2) of the reflecting layer (3) at wavelength $\lambda$ is larger than that (k1) of the recording layer (2) at wavelength $\lambda$ and that the refractive index (n2) of the reflecting layer (3) at wavelength $\lambda$ is smaller than that (n1) of the recording layer (2) at wavelength $\lambda$, but not including the condition of the substrate made by polycarbonate, reflecting layer made by gold and the recording layer having optical characteristics of nl=2.4, k1=0.05 and thickness of the recording layer is d2=140 mm, wherein all features of the excluding condition have to be fulfilled at the same time, also not including the condition of the substrate made by polycarbonate, reflecting layer made by gold and the recording layer having optical characteristics of n1 = 2.45, k1 = 0.06 and thickness of the recording layer is d2 = 140nm, wherein all features of the excluding condition have to be fulfilled at the same time, and also not including the condition of the substrate made by polycarbonate, reflecting layer made by gold and the recording layer having optical characteristics of n1 = 2,35, k1= 0.08 and thickness of the recording layer is d2 = 140nm, wherein all features of the excluding condition have to be fulfilled at the same time.

2. An optical recording medium as defined in claim 1, wherein the thickness of the recorded portions of the rcording layer (2) is set to a predetermined value at which the reflectance is a minimum, a thickness ($d_1$), which gives the minimum reflectance is expressed by the following equation

$$d_1 = \frac{\lambda}{4\pi n_1} \{m\pi + \delta_1 + \delta_2\},$$

where $m\pi$ is in radian.

3. A system comprising a reproducing apparatus having a reproducing light beam and an optical recording medium, the optical recording medium comprising a light-transmitting recording layer (2), a reflecting layer (3) formed on the rear surface of the recording layer (2) and a transparent substrate (1) located on the front side of the recording layer (2), the recording layer (2) being adapted to record data thereon by being locally irradiated with a light beam on the front surface thereof through the transparent substrate and thereby reduced in thickness for forming pits, the light irradiated through the transparent substrate (1) is reflected partly at the interface (11) of the substrate (1) and the recording layer (2) and partly at the interface (21) of the recording layer (2) and the reflecting layer (3), **characterized in that** the reflectance of the recording medium resulting from these reflections is a function of the thickness (d) of the recording layer (2) having maxima at predetermined values of said thickness (d) and that the thickness (d) of the recording layer in the unrecorded state is set to a predetermined value where the reflectance is a maximum, a thickness ($d_2$), which gives the maximum reflectance is expressed by the following equation,

$$d_2 = \frac{\lambda}{4\pi n_1} \{(m+1)\pi + \delta_1 + \delta_2\}$$

$$\delta_1 = \tan^{-1} \frac{2k_1 n_0}{n_1^2 - n_0^2 + k_1^2}$$

$$\delta_2 = \tan^{-1} \frac{2(k_1 n_2 - k_2 n_1)}{n_2^2 - n_1^2 + k_2^2 - k_1^2}$$

where $\delta_1$, $\delta_2$, $(m+1)\pi$ are in radian, X is a wavelength of a laser beam and $\lambda$ is 0.78 $\mu$m, $n_0$ is a refractive index of the substrate (1) at wavelength $\lambda$, and m is an integer giving positive $d_2$ value and m is set to the smallest possible value, and the extinction coefficient (k2) of the reflecting layer (3) at wavelength $\lambda$ is larger than that (k1) of the recording layer (2) at wavelength $\lambda$, and that the refractive index (n2) of the reflecting layer (3) at wavelength $\lambda$ is smaller than that (n1) of the recording layer (2) at wavelength $\lambda$, but not including the condition of the substrate made by polycarbonate, reflecting layer made by gold and the recording layer having optical characteristics of n1=2.4, k1=0.05 and thickness of the recording layer is d2=140 nm, wherein all features of the excluding condition have to be fulfilled at the same time, also not including the condition of the substrate made by polycarbonate, reflecting layer made by gold and the recording layer having optical characteristics of n1 = 2.45, k1 = 0.06 and thickness of the recording layer is d2 =140nm, wherein all features of the excluding condition have to be fulfilled at the same time, and also not including the condition of the substrate made by polycarbonate, reflecting layer made by gold and the recording layer having optical characteristics of n1 = 2,35, k1= 0.08 and thickness of the recording layer is d2 = 140nm, wherein all features of the excluding condition have to be fulfilled at the same time.

4. A system as defined in claim 3, wherein the recording medium is irradiated with a reproduction light beam under the wavelength of 0.78 $\mu$m, the refractive index ($n_0$) of the transparent substrate (1) is about 1.5, the refractive index (n2) of the reflecting layer (3) is about 0.17, and the refractive index (n1) of the recording layer (2) is larger than 2, and the thickness of the recorded portions of the recording layer (2) is set to a predetermined value at which the reflectance is a minimum, a thickness ($d_1$), which gives the minimum reflectance is expressed by the following equation

$$d_1 = \frac{\lambda}{4\pi n_1}\{m\pi + \delta_1 + \delta_2\},$$

where $m\pi$ is in radian.

## Patentansprüche

1. Optisches Aufzeichnungsmedium mit einer lichtdurchlässigen Aufzeichnungsschicht (2), einer Reflexionsschicht (3), die auf der Rückfläche der Aufzeichnungsschicht (2) ausgebildet ist, und einem transparenten Substrat (1), das an der Vorderseite der Aufzeichnungsschicht angeordnet ist, wobei die Aufzeichnungsschicht (2) durch lokales Bestrahlen mit einem Lichtstrahl von ihrer Vorderfläche durch das transparente Substrat und **dadurch** einer Dikkenreduktion zur Ausbildung von Pits Daten speichern kann, wobei das durch das transparente Substrat gestrahlte Licht teilweise an der Grenze (11) des Substrats (1) und der Aufzeichnungsschicht (2) und teilweise an der Grenze (21) der Aufzeichnungsschicht (2) und der Reflexionsschicht (3) reflektiert wird,
**dadurch gekennzeichnet, dass** der Reflexionsgrad des Aufzeichnungsmediums, der durch diese Reflexionen resultiert, eine Funktion der Dicke (d) der Aufzeichnungsschicht (2) ist und Maxima und Minima bei vorgegebenen Werten der Dicke (d) aufweist,
und dass die Dicke (d) der Aufzeichnungsschicht im Nichtaufzeichnungszustand auf einen vorgegebenen Wert eingestellt wird, bei dem der Reflexionsgrad ein Maximum ist, wobei eine Dicke ($d_2$), die den maximalen Reflexionsgrad ergibt, durch die folgende Gleichung ausgedrückt ist:

$$d_2 = \frac{\lambda}{4\pi n_1}\{(m+1)\pi + \delta_1 + \delta_2\}$$

$$\delta_1 = \tan^{-1}\frac{2k_1 n_0}{n_1^2 - n_0^2 + k_1^2}$$

$$\delta_2 = \tan^{-1}\frac{2(k_1 n_2 - k_2 n_1)}{n_2^2 - n_1^2 + k_2^2 - k_1^2}$$

wobei $\delta_1$, $\delta_2$, $(m+1)\pi$ in Kreisgrad sind, $\lambda$ eine Wellenlänge des Laserstrahls und 0,78 $\mu$m ist, $n_0$ ein Brechungsindex des Substrats (1) bi der Wellenlänge $\lambda$ ist und m eine ganze Zahl ist, die einen positiven Wert für $d_2$ gibt, und m auf den kleinstmöglichen Wert eingestellt ist, und der Extinktionskoeffizient (k2) der Reflexionsschicht (3) bei einer Wellenlänge $\lambda$ größer als (k1) der Aufzeichnungsschicht (2) bei der Wellenlänge $\lambda$ ist, und dass der Brechungsindex (n2) der Reflexionsschicht (3) bei der Wellenlänge $\lambda$ kleiner als (n1) der Aufzeichnungsschicht (2) bei der Wellenlänge $\lambda$ ist, aber nicht enthält die Bedingung, dass das Substrat aus Polycarbonat besteht, die Reflexionsschicht aus Gold besteht und die Aufzeichnungsschicht optische Charakteristika von n1 = 2,4, k1 = 0,05 hat, und die Dicke der Aufzeichnungsschicht d2 = 140 nm ist, wobei alle Merkmale der ausschließenden Bedingung gleichzeitig erfüllt sein müssen, auch nicht enthält die Bedingung, dass das Substrat aus Polycarbonat besteht, die Reflexionsschicht aus Gold besteht und die Aufzeichnungsschicht optische Charakteristika von n1 = 2,45, k1 = 0,06 hat, und die Dicke der Aufzeichnungsschicht d2 = 140 nm ist, wobei alle Merkmale der ausschließenden Bedingung gleichzeitig erfüllt sein müssen, und auch nicht enthält die Bedingung, dass das Substrat aus Polycarbonat besteht, die Reflexionsschicht aus Gold besteht, und die Aufzeichnungsschicht optische Charakteristika von n1 = 2,35, k1 = 0,08 hat, und die Dicke der Aufzeichnungsschicht d2 = 140 nm ist, wobei alle Merkmale der ausschließenden Bedingung gleichzeitig erfüllt sein müssen.

2. Optisches Aufzeichnungsmedium nach Anspruch 1, wobei die Dicke der aufgezeichneten Teile der Aufzeichnungsschicht (2) auf einen vorgegebenen Wert eingestellt ist, bei dem der Reflexionsgrad ein Minimum ist, eine Dicke ($d_1$), die einen minimalen Reflexionsgrad ergibt, durch die folgende Gleichung ausgedrückt ist:

$$d_1 = \frac{\lambda}{4\pi n_1}\{m\pi + \delta_1 + \delta_2\},$$

wobei $m\pi$ in Kreisgrad ist.

3. System mit einem Wiedergabegerät mit einem Wiedergabelichtstrahl und einem optischen Aufzeichnungsmedium, wobei das optische Aufzeichnungsmedium eine lichtdurchlässige Aufzeichnungsschicht (2), eine Reflexionsschicht (3), die auf der Rückfläche der Aufzeichnungsschicht (2) ausgebildet ist, und ein transparentes Substrat (1) aufweist, das auf der Vorderseite der Aufzeichnungsschicht (2) ausgebildet ist, wobei die Aufzeichnungsschicht (2) durch lokales Bestrahlen mit einem Lichtstrahl auf ihre Vorderfläche durch das transparente Substrat und dabei durch eine Dickenreduktion zur Ausbildung von Pits Daten aufzeichnen kann, wobei das durch das transparente Substrat (1) eingestrahlte Licht teilweise an der Grenze (11) des Substrats (1) und der Aufzeichnungsschicht (2) und teilweise an der Grenze (21) der Aufzeichnungsschicht (2) und der Reflexionsschicht (3) reflektiert wird, **dadurch gekennzeichnet, dass** der Reflexionsgrad des Aufzeichnungsmediums, der aus disen Reflexionen resultiert, eine Funktion der Dicke (d) der Aufzeichnungsschicht (2) ist, die bei vorbestimmten Werten der Dicke (d) Maxima hat, und dass die Dicke (d) der Aufzeichnungsschicht im Nichtaufzeichnungszustand auf einen vorgegebenen Wert eingestellt ist, bei dem der Reflexionsgrad ein Maximum ist, wobei eine Dicke ($d_2$), die einen maximalen Reflexionsgrad ergibt, durch die folgenden Gleichungen ausgedrückt ist:

$$d_2 = \frac{\lambda}{4 \pi n_1} (m\pi + \delta_1 + \delta_2)$$

$$\delta_1 = \tan^{-1} \frac{2 k_1 n_0}{n_1^2 - n_0^2 + k_1^2}$$

$$\delta_2 = \tan^{-1} \frac{2 (k_1 n_2 - k_2 n_1)}{n_2^2 - n_1^2 + k_2^2 - k_1^2}$$

wobei $\delta_1$, $\delta_2$, $(m + 1) \pi$ in Kreisgrad sind, $\lambda$ eine Wellenlänge des Laserstrahls ist und $\lambda$ gleich 0,78 $\mu$m ist, $n_0$ ein Brechungsindex des Substrats (1) bei der Wellenlänge $\lambda$ ist, und m eine ganze Zahl ist, die einen positiven Wert $d_2$ ergibt, und m auf den kleinstmöglichen Wert gesetzt ist, und der Extinktionskoeffizient (k2) der Reflexionsschicht (3) bei einer Wellenlänge $\lambda$ größer als (k1) der Aufzeichnungsschicht (2) bei der Wellenlänge $\lambda$ ist, und dass der Brechungsindex (n2) der Reflexionsschicht (3) bei der Wellenlänge $\lambda$ kleiner als (n1) der Aufzeichnungsschicht (2) bei der Wellenlänge $\lambda$ ist, aber nicht enthält die Bedingung, dass das Substrat aus Polycarbonat besteht, die Reflexionsschicht aus Gold besteht, und die Aufzeichnungsschicht optische Charakteristika von n1 = 2,4, k1 = 0,05 hat, und die Dicke der Aufzeichnungsschicht d2 = 140 nm ist, wobei alle Merkmale der ausschließenden Bedingung gleichzeitig erfüllt sein müssen, ebenfalls nicht enthält die Bedingung, dass das Substrat aus Polycarbonat besteht, die Reflexionsschicht aus Gold besteht, und die Aufzeichnungsschicht optische Charakteristika von n1 = 2,45, k1 = 0,06 hat, und die Dicke der Aufzeichnungsschicht d2 = 140 nm ist, wobei alle Merkmale der ausschließenden Bedingung gleichzeitig erfüllt sein müssen, und auch nicht enthält die Bedingung, dass das Substrat aus Polycarbonat besteht, die Reflexionsschicht aus Gold besteht, und die Aufzeichnungsschicht optische Charakteristika von n1 = 2,35, k1 = 0,08 hat, und die Dicke der Aufzeichnungsschicht gleich d2 = 140 nm ist, wobei alle Merkmale der ausschließenden Bedingung gleichzeitig erfüllt sein müssen.

4.  System nach Anspruch 3, wobei das Aufzeichnungsmedium mit einem Wiedergabelichtstrahl der Wellenlänge von 0,78 $\mu$m bestrahlt wird, der Brechungsindex ($n_0$) des transparenten Substrats (1) ungefähr 1,5 beträgt, der Brechungsindex (n2) der Reflexionsschicht (3) ungefähr 0,17 beträgt, und der Brechungsindex (n1) der Aufzeichnungsschicht (2) größer als 2 ist, und die Dicke der aufgezeichneten Teile der Aufzeichnungsschicht 2 auf einen vorbestimmten Wert gesetzt ist, bei dem der Reflexionsgrad ein Minimum ist, wobei eine Dicke ($d_1$), die den minimalen Reflexionsgrad ergibt, durch die folgende Gleichung ausgedrückt ist:

$$d_1 = \frac{\lambda}{4 \pi n_1} \{m\pi + \delta_1 + \delta_2\},$$

wobei $m\pi$ in Kreisgrad ist.

### Revendications

1.  Support d'enregistrement optique comprenant une couche d'enregistrement (2) transmettrice de lumière, une couche réflectrice (3) formée sur la surface arrière de la couche d'enregistrement (2) et un substrat transparent (1) placé sur le côté avant de la couche d'enregistrement, la couche d'enregistrement (2) étant adaptée pour que l'on y enregistre des données en l'irradiant localement avec un faisceau laser sur sa surface avant à travers le substrat transparent et en la réduisant ainsi d'épaisseur pour former des microcuvettes, la lumière irradiée à travers le substrat transparent (1) étant réfléchie partiellement à l'interface (11) entre le substrat (1) et la couche d'enregistrement (2) et partiellement à l'interface (21) entre la couche d'enregistrement (2) et la couche réflectrice (3), **caractérisé en ce que**
le pouvoir réfléchissant du support d'enregistrement résultant de ces réflexions est fonction de l'épaisseur (d) de la couche d'enregistrement (2) qui présente des maxima et des minima à des valeurs prédéterminées de ladite épaisseur (d),
et **en ce que** l'épaisseur (d) de la couche d'enregistrement dans l'état non enregistré est fixée à une valeur prédéterminée où le pouvoir réfléchissant est un maximum, une épaisseur ($d_2$), qui donne le pouvoir réfléchissant maximum, est exprimée par l'équation suivante :

$$d_2 = \frac{\lambda}{4\pi n_1}\left\{(m+1)\pi + \delta_1 + \delta_2\right\}$$

$$\delta_1 = \tan^{-1}\frac{2k_1 n_0}{n_1^2 - n_0^2 + k_1^2}$$

$$\delta_2 = \tan^{-1}\frac{2(k_1 n_2 - k_2 n_1)}{n_2^2 - n_1^2 + k_2^2 - k_1^2}$$

où $\delta_1$, $\delta_2$, (m+1)$\pi$ sont en radians, $\lambda$ est une longueur d'onde d'un faisceau laser et vaut 0,78 $\mu$m, $n_0$ est un indice de réfraction du substrat (1) à la longueur d'onde $\lambda$, et m est un entier qui donne une valeur $d_2$ positive et m est fixé à la valeur la plus petite possible, et le coefficient d'extinction (k2) de la couche réflectrice (3) à la longueur d'onde $\lambda$ est plus grand que celui (k1) de la couche d'enregistrement (2) à la longueur d'onde $\lambda$ et que l'indice de réfraction (n2) de la couche réflectrice (3) à la longueur d'onde $\lambda$ est plus petit que celui (n1) de la couche d'enregistrement (2) à la longueur d'onde $\lambda$, mais sans inclure la condition dans laquelle le substrat est en polycarbonate, la couche réflectrice est en or et la couche d'enregistrement ayant comme caractéristiques optiques n1 = 2,4, k1 = 0,05 et l'épaisseur de la couche d'enregistrement est d2 = 140 nm, où tous les éléments de la condition exclusive doivent être satisfaits en même temps, et aussi sans inclure la condition dans laquelle le substrat est en polycarbonate, la couche réflectrice est en or et la couche d'enregistrement ayant comme caractéristiques optiques n1 = 2,45, k1 = 0,06 et l'épaisseur de la couche d'enregistrement est d2 = 140 nm, où tous les éléments de la condition exclusive doivent être satisfaits en même temps, et aussi sans inclure la condition dans laquelle le substrat est en polycarbonate, la couche réflectrice est en or et la couche d'enregistrement ayant comme caractéristiques optiques n1 = 2,35, k1 = 0,08 et l'épaisseur de la couche d'enregistrement est d2 = 140 nm, où tous les éléments de la condition exclusive doivent être satisfaits en même temps.

2. Support d'enregistrement optique selon la revendication 1, dans lequel l'épaisseur des parties enregistrées de la couche d'enregistrement (2) est fixée à une valeur prédéterminée à laquelle le pouvoir réfléchissant est minimum, une épaisseur ($d_1$), qui donne le pouvoir réfléchissant minimum, est exprimée par l'équation suivante :

$$d_1 = \frac{\lambda}{4\pi n_1}\left\{m\pi + \delta_1 + \delta_2\right\}$$

où m$\pi$ est en radians.

3. Système comprenant un appareil de reproduction comportant un faisceau de lumière de reproduction et un support d'enregistrement optique, le support d'enregistrement optique comprenant une couche (2) d'enregistrement transmettrice de lumière, une couche réflectrice (3) formée sur la surface arrière de la couche d'enregistrement (2) et un substrat transparent (1) placé sur le côté avant de la couche d'enregistrement, la couche d'enregistrement (2) étant adaptée pour que l'on y enregistre des données en l'irradiant localement avec un faisceau laser sur sa surface avant à travers le substrat transparent et en la réduisant ainsi d'épaisseur pour former des microcuvettes, la lumière irradiée à travers le substrat transparent (1) étant réfléchie partiellement à l'interface (11) du substrat (1) et la couche d'enregistrement (2) et partiellement à l'interface (11) entre la couche d'enregistrement (2) et la couche réflectrice (3), **caractérisé en ce que** le pouvoir réfléchissant du support d'enregistrement résultant de ces réflexions est fonction de l'épaisseur (d) de la couche d'enregistrement (2) qui présente des maxima à des valeurs prédéterminées de ladite épaisseur (d) et **en ce que** l'épaisseur (d) de la couche d'enregistrement dans l'état non enregistré est fixée à une valeur prédéterminée à laquelle le pouvoir réfléchissant est maximum, une épaisseur ($d_2$), qui donne le pouvoir réfléchissant maximum, est exprimée par l'équation suivante :

$$d_2 = \frac{\lambda}{4\pi n_1}\{(m+1)\pi + \delta_1 + \delta_2\}$$

$$\delta_1 = \tan^{-1}\frac{2k_1 n_0}{n_1^2 - n_0^2 + k_1^2}$$

$$\delta_2 = \tan^{-1}\frac{2(k_1 n_2 - k_2 n_1)}{n_2^2 - n_1^2 + k_2^2 - k_1^2}$$

où $\delta_1$, $\delta_2$, $(m+1)\pi$ sont en radians, $\lambda$ est une longueur d'onde d'un faisceau laser et vaut 0,78 $\mu$m, $n_0$ est un indice de réfraction du substrat (1) à la longueur d'onde $\lambda$, et m est un entier qui donne une valeur $d_2$ positive et m est fixé à la valeur la plus petite possible, et le coefficient d'extinction (k2) de la couche réflectrice (3) à la longueur d'onde $\lambda$ est plus grand que celui (k1) de la couche d'enregistrement (2) à la longueur d'onde $\lambda$ et que l'indice de réfraction (n2) de la couche réflectrice (3) à la longueur d'onde $\lambda$ est plus petit que celui (n1) de la couche d'enregistrement (2) à la longueur d'onde $\lambda$, mais sans inclure la condition dans laquelle le substrat est en polycarbonate, la couche réflectrice est en or et la couche d'enregistrement ayant comme caractéristiques optiques n1 = 2,4, k1 = 0,05 et l'épaisseur de la couche d'enregistrement est d2 = 140 nm, où tous les éléments de la condition exclusive doivent être satisfaits en même temps, aussi sans inclure la condition dans laquelle le substrat est en polycarbonate, la couche réflectrice est en or et la couche d'enregistrement ayant comme caractéristiques optiques n1 = 2,45, k1 = 0,06 et l'épaisseur de la couche d'enregistrement est d2 = 140 nm, où tous les éléments de la condition exclusive doivent être satisfaits en même temps, et aussi sans inclure la condition dans laquelle le substrat est en polycarbonate, la couche réflectrice est en or et la couche d'enregistrement ayant comme caractéristiques optiques n1 = 2,35, k1 = 0,08 et l'épaisseur de la couche d'enregistrement est d2 = 140 nm, où tous les éléments de la condition exclusive doivent être satisfaits en même temps.

4.  Système selon la revendication 3, dans lequel le support d'enregistrement est irradié avec un faisceau de lumière de reproduction d'une longueur d'onde de 0,78 $\mu$m, l'indice de réfraction ($n_0$) du substrat transparent (1) est d'environ 1,5, l'indice de réfraction (n2) de la couche réflectrice (3) est d'environ 0,17 et l'indice de réfraction (n1) de la couche d'enregistrement (2) est plus grand que 2, et l'épaisseur des parties enregistrées de la couche d'enregistrement (2) est fixée à une valeur prédéterminée à laquelle le pouvoir réfléchissant est minimum, une épaisseur ($d_1$), qui donne le pouvoir réfléchissant minimum, est exprimée par l'équation suivante :

$$d_1 = \frac{\lambda}{4\pi n_1}\{m\pi + \delta_1 + \delta_2\}$$

où $m\pi$ est en radians.

FIG.1

Laser Beam

FIG.2

## FIG.3

Thickness d

## FIG.4

Thickness (nm)

FIG.5

FIG.6

## FIG.7

Reflectance (%)

100

50

0

100    200

Thickness (pm)

## FIG.8

Reflectance (%)

100

50

0

10    15

Power (mw)

x : 50 nm

△ : 100 nm

□ : 210 nm

# FIG.9

Laser Beam

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• EP 376327 A

### Non-patent literature cited in the description

• *Research Disclosure,* June 1981, vol. 20634, 237-241

• **AKIRA KINBARA ; HIDEO FUJIWARA.** Applied Physics, Book 3, Thin Films. *Shokabo,* 196-198